# EUROPEAN PATENT APPLICATION

(11) **EP 1 667 365 A1**
(43) Date of publication of application: **07.06.2006**
(21) Application number: 04728506.9
(22) Date of filing: 21.04.2004
(51) Int. Cl.: H04L 12/28, H04L 12/66

(54) **A DIGITAL SUBSCRIBER LINE ACCESS MULTIPLEXING APPARATUS AND A METHOD FOR SIGNAL TRANSFERRING**

(30) Priority: 13.09.2003 CN 03157878
(71) Applicant: Huawei Technologies Co., Ltd., Longgang District, Shenzehen, Guangdong 518129 (CN)
(72) Inventor: XIONG, Yupeng, Shenzhen, Guangdong 518129 (CN); HUANG, Yuancheng, Shenzhen, Guangdong 518129 (CN); ZHANG, Jun, Shenzhen, Guangdong 518129 (CN)
(74) Representative: Strehl Schübel-Hopf & Partner
(86) International application number: PCT/CN2004/000383
(87) International publication number: WO 2005/027418

(57) **Abstract**

A digital subscriber line access multiplexing apparatus is disclosed in the invention, including subscriber side wide band service processing module, multiplex/demultiplex module, memory, network side processing module. Using the invention, the multiplexing apparatus could locate farther, and the distance of the signal transferring would be longer, satisfying the wide band service needs of the out-of-the-way area; and for the places where the optical fibers aren't laid or there is no free optical transmitting resources, there is no need to put large amount of manpower and material resources to lay the optical fiber or increase the optical transmission equipment, while satisfying the needs of wide band services. A method employing the digital subscriber line access multiplexing apparatus for signal transferring is also disclosed in this invention.

## Description

### Field of the Invention

The present invention relates to communication systems, and more particularly to a Digital Subscriber Line Access Multiplexer (DSLAM) and a method for transmitting signals based on the DSLAM in communication systems.

### Background of the Invention

In the last few years, as communication network technology develops, communication networks were constructed at a high speed in China, and communication system transmission devices are available in most regions. However, the overall percentage of coverage of communication system transmission devices is not high due to financial and technical factors. While, through development of over a century, common twisted pair technology has been well matured. Twisted pairs are low in price and high in popularity and percentage of coverage. Though transmission devices have not been deployed in some regions, common twisted pairs are available there. Therefore, signal transmission through common twisted pairs is a technology good for far and remote regions without transmission devices.

XDSL technique is a modulation technique based on common twisted pairs and is developing rapidly. Presently, standard XDSL techniques include ADSL (Asynchronous Digital Subscriber Line) technique, VDSL (Very High Digital Subscriber Line) technique, and SHDSL (Single Pair High Bit Rate Digital Subscriber Line) technique, etc.

Wherein, ADSL technique supports at least 1Mbps upstream and at least 8Mbps downstream asymmetric rate, with the transmission distance up to 5km; VDSL technique supports 12Mbps upstream and 12Mbps downstream symmetric rates or 25Mbps upstream and 25Mbps downstream symmetric rates, with the transmission distance up to 1.5km; SHDSL technique supports 2Mbps upstream and 2Mbps downstream symmetric rates through a single pair and 4.5Mbps upstream and 4.5Mbps downstream symmetric rate through multiple pairs of lines, with the transmission distance up to 5km.

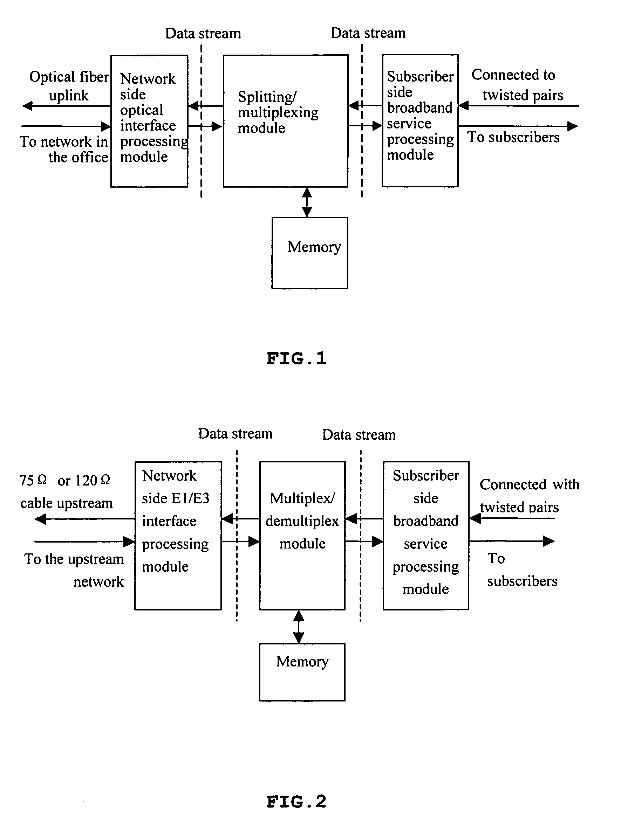

Signal transmission with XDSL technique requires DSLAMs to provide XDSL access. At present, DSLAM devices developed by many manufacturers can embody as 3 technical solutions by classification. Fig. 1 is a structural block diagram of a DSLAM device which employs an optical interface upstream to perform signal transmission according to the first prior art: if the distance between the DSLAM device and the upper layer device is long, the DSLAM device can only support optical interface upstream with optical fibers as the transmission medium. The DSLAM device includes: a subscriber side broadband service processing module, a multiplex/demultiplex module, a network side optical interface processing module, and a memory. In the upstream direction from subscriber side, the subscriber side XDSL signals are converted by the subscriber side broadband service processing module into upstream data stream, and then forwarded to the multiplex/demultiplex module to process; the multiplex/demultiplex module multiplexes the processed upstream data stream from the subscriber side broadband service processing module, writes the valid data into the memory, and then sends the data to the network side optical interface processing module to process; the network side optical interface processing module receives the data stream from the multiplex/demultiplex module, converts the data stream into optical signals, and then transmits the optical signals via optical fibers to the upstream network.

Fig. 2 is a structural block diagram of a DSLAM device, which employs electrical interface upstreams such as E1 UNI/E1 IMA/E3 to perform signal transmission according to the second prior art: if the distance between the DSLAM device and the upper layer device is long and there is SDH/PDH transmission devices available between them, the DSLAM device is connected to the SDH transmission device, with the transmission medium as a 75Ω or 120Ω cable. The DSLAM device includes a subscriber side broadband service processing module, a multiplex/demultiplex module, a network side E1/E3 interface processing module, and a memory. In the upstream direction from subscriber side, the broadband signals are converted by the subscriber side broadband service processing module into data stream, and then sent to the multiplex/demultiplex module to process; the multiplex/demultiplex module demultiplexes/multiplexes the processed data stream from the subscriber side broadband service processing module, writes the valid data into the memory, and then sends the data to the network side E1/E3 interface processing module to process; the network side E1/E3 interface processing module receives the data stream from the multiplex/demultiplex module and converts the data stream into electrical signals, and then transmits the electrical signals via the 75Ω or 120Ω cable to the PDH/SDH device, where the electrical signals are converted into optical signals and transmitted to the upstream network via optical fibers.

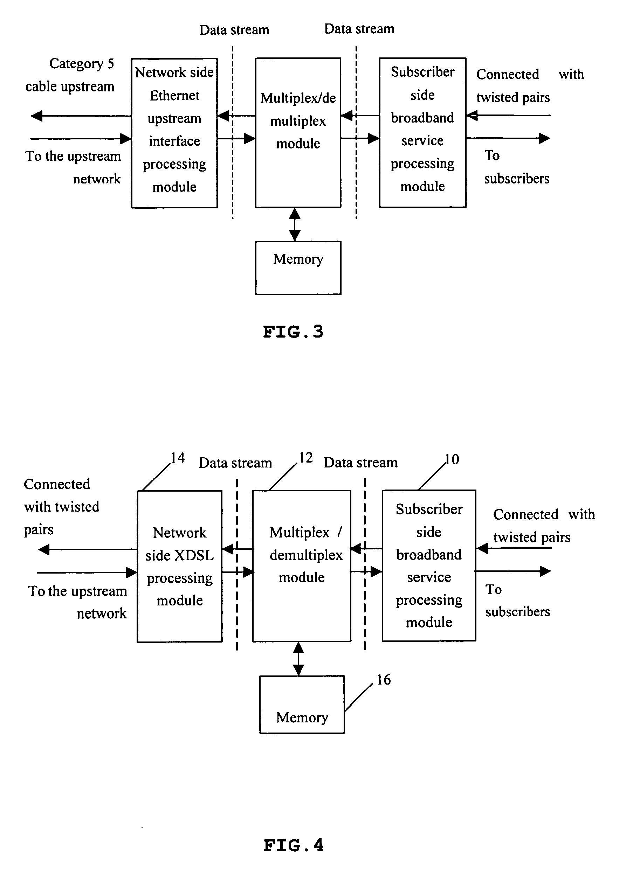

Fig. 3 is a structural block diagram of a DSLAM device which employs an FE or GE electrical interface upstream to perform signal transmission according to the third prior art: if the distance between the DSLAM device and the upper layer device is short, the transmission medium between the DSLAM device and the upper layer device may be Category 5 twisted pairs. The DSLAM device includes a subscriber side broadband service processing module, a multiplex/demultiplex module, a network side Ethernet upstream interface processing module, and a memory. In the upstream direction from subscriber side, the broadband signals is converted by the subscriber side broadband service processing module into data stream, and then sent to the multiplex/demultiplex module to process; the multiplex/demultiplex module demultiplexes/multiplexes the processed data stream from the subscriber side broadband service processing module, writes the valid data into the memory, and sends the data to the network side Ethernet upstream interface processing module to process; the network side Ethernet upstream interface processing module receives the data stream from the multiplex/demultiplex module, converts the data stream into electrical signals, and then transmits the electrical signals via Category 5 twisted pairs to the upstream network.

In any of the above three technical solutions, the upstream transmission is performed by means of ATM (Asynchronous Transfer Mode) or IP (Internet Protocol) transmission devices; therefore, a costly transmission network has to be constructed in the communication system. For prior DSLAM devices, if E1 UNI/E1 IMA/E3 or FE/GE electrical interface is used for upstream, since the transmission medium is cables or Category 5 twisted pairs, which lead to short-distance transmission and therefore can't extend the DSLAM devices far enough to meet the demand for broadband services in remote regions; if an optical interface or E1 UNI//E1 IMA/E3 via SDH/PDH is used for upstream transmission, optical fibers are required to be laid; as a result, optical fibers have to be laid or optical transmission devices have to be added in those regions without optical fibers or spare optical transmission resource, which means investment of great labors and resources.

### Summary of the Invention

In order to overcome the disadvantages in the prior art and meet the demand for broadband services in remote regions and those regions without optical fibers or spare optical transmission resources, an embodiment of the present invention provides a Digital Subscriber Line (XDSL) Access Multiplexer, including:

A subscriber side Broadband service processing module, a multiplex/demultiplex module, a network side Digital Subscriber Line (XDSL) processing module, and a memory;

Wherein, the subscriber side broadband service processing module is designed to convert the subscriber side upstream XDSL signals from the subscriber side into upstream data stream signals to be processed, and/or convert the processed downstream data stream signals from the multiplex/demultiplex module into subscriber side downstream XDSL signals and send the subscriber side downstream XDSL signals to the subscriber side; the multiplex/demultiplex module is designed to multiplex and process the upstream data stream signals to be processed from the subscriber side broadband service processing module and send the processed upstream data stream signals to the network side XDSL processing module, and/or demultiplexes and process the downstream data stream signals to be processed from the network side XDSL processing module and send the processed downstream data stream signals to the subscriber side broadband service processing module; the network side XDSL processing module is designed to convert the processed upstream data stream signals from the multiplex/demultiplex module into network side upstream XDSL signals and send the network side upstream XDSL signals to the upstream network, and/or convert the network side downstream XDSL signals from the upstream network into the downstream data stream signals to be processed and send the downstream data stream signals to be processed to the multiplex/demultiplex module; the memory is designed to store the processed upstream data stream signals multiplexed and processed by the multiplex/demultiplex module and send the processed upstream data stream signals to the network side XDSL processing module, and/or store the processed downstream data stream signals demultiplexed and processed by the multiplex/demultiplex module and send the processed downstream data stream signals to the subscriber side broadband service processing module.

Preferably, the multiplex/demultiplex module further includes a determining device for determining whether the upstream data stream signals to be processed meet predetermined rules after being multiplexed or whether the downstream data stream signals to be processed meet predetermined rules after being demultiplexed; if so, the determining device determines the signals as valid data; otherwise the determining device discards the data.

Optionally, the step of determining whether the upstream data stream signals to be processed meet predetermined rules after being multiplexed or determining whether the downstream data stream signals to be processed meet predetermined rules after being demultiplexed is performed by searching in a table with the Virtual Path Identifier (VPI)/Virtual Channel Identifier (VCI) of the upstream or downstream data stream signals to be processed obtained by the multiplex/demultiplex module.

Preferably, the memory is externally attached to and/or built in the multiplex/demultiplex module.

Optionally, the multiplex/demultiplex module further includes a flow control module, which allocates bandwidth in accordance with the status and activated rate of the ports of the network side XDSL processing module or the subscriber side broadband service processing module and discards low-level data in accordance with the traffic level of the upstream or downstream processed data stream signals.

Preferably, the interface between the network side XDSL processing module and the multiplex/demultiplex module is a Universal Test and Operations Physical Interface for Asynchronous Transfer Mode (UTOPIA) interface, or a Media Independent Interface (MII) interface, or a Time Division Multiplexing (TDM) interface.

Optionally, the network side XDSL processing module is an ADSL processing module, which provides an ADSL interface connected with a twisted pair; or, the network side XDSL processing module is a VDSL processing module, which provides a VDSL interface connected with a twisted pair; or, the network side XDSL processing module is a SHDSL processing module, which provides a SHDSL interface connected with a twisted pair.

Preferably, the ADSL processing module employs ADSL, ADSL 2, ADSL+, or ADSL2+ technique.

Optionally, the SHDSL processing module employs single pair SHDSL technique or multi-pair SHDSL technique.

Another embodiment of the present invention provides a method for transmitting signals by using the XDSL Access Multiplexer, including the steps of:
obtaining subscriber side upstream XDSL signals from subscriber side and converting the subscriber side upstream XDSL signals into upstream data stream signals to be processed, or obtaining network side downstream XDSL signals from the upstream network and converting the network side downstream XDSL signals into downstream data stream signals to be processed;

multiplexing the upstream data stream signals to be processed, or demultiplexing the downstream data stream signals to be processed;

determining whether the upstream or downstream data stream signals to be processed are valid;

sending the valid data stream signals to different sending queues in the memory;

sending the processed upstream or downstream data stream signals in the queues;

converting the processed upstream data stream signals into network side XDSL signals and sending the network side XDSL signals to the upstream network via a twisted pair, or converting the processed downstream data stream signals into subscriber side XDSL signals and sending the subscriber side XDSL signals to the subscriber side via a twisted pair.

Preferably, the upstream or downstream data stream signals to be processed or the processed upstream or downstream data stream signals are ATM data, or Ethernet data, or TDM data.

Optionally, the step of multiplexing the upstream data stream signals to be processed or demultiplexing the downstream data stream signals to be processed includes the steps of:

polling multiple XDSL ports of the subscriber side broadband service processing module or the network side XDSL processing module, to determine whether there are upstream or downstream data stream signals to be processed to be sent; if not, the multiplex/demultiplex module continuing to poll the multiple XDSL ports of the subscriber side broadband service processing module or the network side XDSL processing module, otherwise receiving the upstream or downstream data stream signals to be processed into the First In First Out (FIFO) buffer of the multiplex/demultiplex module.

Preferably, the step of determining whether the upstream or downstream data stream signals to be processed are valid includes the steps of:

extracting the upstream data stream signals to be processed in the receiving FIFO buffer or the downstream data stream signals to be processed in the sending FIFO buffer of the multiplex/demultiplex module,
performing searching in a table in accordance with the VPI/VCI of the upstream data stream signals to be processed or the downstream data stream signals to be processed, and
determining whether the upstream data stream signals to be processed or the downstream data stream signals to be processed are valid;
if not, deleting the data,
otherwise replacing VPI/VCI of the valid data in accordance with the VPI/VCI address translation table.

Optionally, the step of sending the valid data stream signals to different sending queues in the memory includes the steps of:

determining whether the valid data stream signals are of high priority;
if it is of high priority, sending the data to the high-priority queue in the memory to wait for being sent;
if it is of low priority, sending the low-priority data to the low-priority queue in the memory to wait for being sent.

Preferably, the step of sending the processed upstream or downstream data stream signals in the queues includes the steps of:

determining whether there is data to be sent in the high-priority sending queue in the memory;
if so, reading the data into the FIFO buffer to wait for being sent,
otherwise determining whether there is data to be sent in the low-priority sending queue;
if so, reading the data into the FIFO buffer to wait for being sent,
otherwise returning to determine whether there is data to be sent in the high-priority sending queue in the memory;

polling the multiple XDSL ports of the network side XDSL processing module or the subscriber side broadband service processing module and determining whether the ports are ready to receive data;
if so, sending the data in the FIFO buffer to the network side XDSL processing module or the subscriber side broadband service processing module,
otherwise continuing the polling.

In the present invention, by adding a network side XDSL processing module in the existing DSLAM device and connecting the multiplex/demultiplex module to the network side XDSL processing module via a UTOPIA, MII, or TDM interface, data from the multiplex/demultiplex module can be converted into XDSL signals in the network side XDSL processing module and then transmitted in upstream direction via twisted pairs; at the opposite side of the twisted pairs, the XDSL signals are reproduced into data stream via the XDSL MODEM and then sent to the upstream network; in this way, the DSLAM device can be extended to a farther place, and the distance of signal transmission can be extended, so as to meet the demand for broadband services in some remote regions; in addition, in regions without optical fibers or spare optical transmission resources, the demand for broadband services can be met without investing much labor and physical resources to lay optical fibers or add optical transmission devices.

### Brief Description of the Drawings

Fig.1 is a structural block diagram of a DSLAM device which employs an optical interface upstream to perform signal transmission according to the first prior art;

Fig. 2 is a structural block diagram of a DSLAM device, which employs electrical interface upstreams such as E1 UNI/E1 IMA/E3 to perform signal transmission via a SDH/PDH transmission device according to the second prior art;

Fig. 3 is a structural block diagram of a DSLAM device which employs an FE/GE electrical interface upstream to perform signal transmission according to the third prior art;

Fig.4 is a structural block diagram of the DSLAM device according to an embodiment of the present invention;

Fig.5 is a structural block diagram of the DSLAM device according to an embodiment of the present invention;

Fig.6 is a flow diagram of the method for transmitting signals based on the DSLAM device according to an embodiment of the present invention;

Fig.7 is a flow diagram of the method for transmitting signals based on the DSLAM device according to an embodiment of the present invention.

### Detailed Description of the Embodiments

To help those skilled in the art to understand the present invention better, hereinafter the present invention is described in detail with reference to the embodiments and the attached drawings.

Fig.4 is a structural block diagram of the DSLAM device according to an embodiment of the present invention. As shown in Fig.4, the DSLAM device according to an embodiment of the present invention includes:

A subscriber side broadband service processing module 10, which processes the modulated broadband signals, i.e., XDSL signals, from subscriber side, converts the signals into upstream data stream, and sends the data stream to a multiplex/demultiplex module 12 to process, wherein the data stream may be ATM data, or Ethernet data, or TDM data; furthermore, the broadband service processing module 10 also receives the downstream data stream from the multiplex/demultiplex module 12 and converts the data stream into modulated broadband signals, i.e., XDSL signals, and transmits the XDSL signals via a twisted pair to the opposite end thereof, where the XDSL signals are converted into appropriate data by a XDSL MODEM and sent to the subscriber side device;

The multiplex/demultiplex module 12, which multiplexes the upstream data stream processed by the subscriber side broadband service processing module 10 and performs searching in a table in accordance with the obtained VPI (Virtual Path Identifier)/VCI (Virtual Channel Identifier) of the data stream and thereby determines whether the data stream is valid, and, if the data stream is invalid, deletes the data stream; if the data stream is valid, replaces the VPI/VCI of the data stream in accordance with the VPI/VCI translation table and stores the valid data stream into the external memory, and then sends the data stream to the network side XDSL processing module; furthermore, the multiplex/demultiplex module 12 also demultiplexes the downstream data stream from the network side XDSL processing module and performs searching in a table in accordance with the obtained VPI/VCI of the data stream and thereby determines whether the data stream is valid, and, if the data stream is invalid, deletes the data stream; if the data stream is valid, replaces the VPI/VCI of the data stream in accordance with the VPI/VCI translation table, and stores the valid data stream into the external memory 16, and then sends the data stream to the subscriber side broadband service processing module 10;

A network side XDSL processing module 14, which receives the upstream data stream from the multiplex/demultiplex module 12 and converts the data stream into modulated broadband signals, i.e. , XDSL signals, and then transmits the signals via a twisted pair to the opposite end thereof, where the XDSL signals are reproduced into a data stream by a XDSL MODEM and sent to the upstream network; furthermore, the network side XDSL processing module 14 also processes the modulated broadband signals, i.e., XDSL signals, from the upstream network, converts the XDSL signals into downstream data stream, and sends the data stream to the multiplex/demultiplex module 12 to process;

A memory 16, which may be externally attached to the multiplex/demultiplex module 12 or any other device or built in the multiplex/demultiplex module 12, and stores the data stream demultiplexed, multiplexed, and sorted by the multiplex/demultiplex module 12, and sends the data stream to the subscriber side broadband service processing module 10 or the network side XDSL processing module 14;

A determining device, disposed in the multiplex/demultiplex module 12, which determines whether the demultiplexed /multiplexed data complies predetermined rules, i.e. , determines by searching in a table in accordance with the VPI/VCI of the data obtained by the multiplex/demultiplex module 12, and, if the data is determined as invalid, discards the data; if the data is determined as valid, replaces the VPI/VCI of the data in accordance with the VPI/VCI translation table, and then stores the valid data stream into the external memory 16.

The multiplex/demultiplex module 12 may be loaded with a flow control module, or the multiplex/demultiplex module 12 is loaded with no flow control module. The flow control module is designed to allocate bandwidth in accordance with the status and activated rate of the ports of the network side XDSL processing module 14, and discard low-level data in accordance with the traffic levels, so as to prevent any data loss during data transmission.

The interface between the network side XDSL processing module 14 and the multiplex/demultiplex module 12 can be a UTOPIA (Universal Test and Operations Physical Interface for Asynchronous Transfer Mode) interface, a MII (Media Independent Interface) interface, or a TDM (Time Division Multiplexing) interface, and is designed to transmit data stream from the network side XDSL processing module 14 and the multiplex/demultiplex module 12 respectively.

The network side XDSL processing module 14 may be an ADSL processing module, which provides an ADSL interface connected with a twisted pair.

The ADSL processing module may employ ADSL, ADSL2, ADSL+, or ADSL2+ technique.

The network side XDSL processing module 14 may be a very high digital subscriber line processing module, which provides a very high digital subscriber line interface connected with twisted pairs.

The XDSL processing module 14 may be a single pair high bit rate digital subscriber line processing module, which provides a single pair high bit rate digital subscriber line interface connected with twisted pairs.

The single pair high bit rate digital subscriber line (SHDSL) processing module may employ single pair SHDSL technique or multi-pair SHDSL technique.

Hereunder the present invention is described in an example:

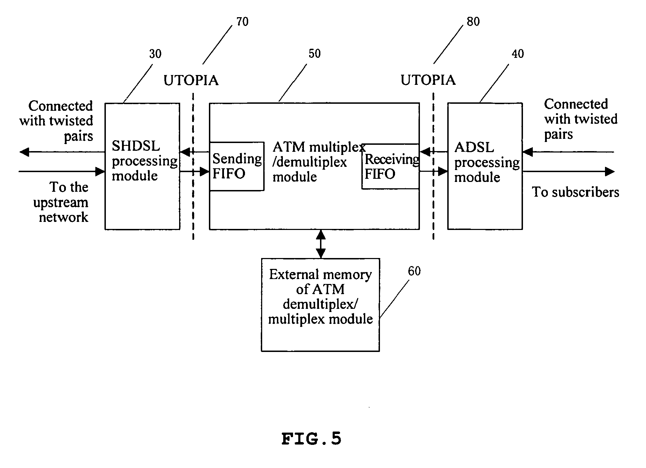

As shown in Fig.5, the network side XDSL processing module is a SHDSL processing module 30; the subscriber side broadband service processing module is an ADSL processing module 40; the multiplex/demultiplex module is an ATM multiplex/demultiplex module 50; the memory 60 is externally attached to the ATM multiplex/demultiplex module; the interface between the ATM multiplex/demultiplex module and the SHDSL processing module is a UTOPIA interface 70; the interface between the ATM multiplex/demultiplex module and the ADSL processing module is a UTOPIA interface 80; the ATM multiplex/demultiplex module has a flow control module inside.

The ADSL processing module implements the function of converting ADSL signals into ATM cells in the upstream direction from subscriber side to the DSLAM device. First, the ADSL processing module performs amplification, filtering, A/D conversion, cyclic prefix removal, FFT (Fast Fourier Transform), de-mapping, de-capsulation, RS decoding, CRC (Circle Redundant Check) and de-framing on the received ADSL signals to obtain ATM cells; then, the ADSL processing module sends the ATM cells to the ATM multiplex/demultiplex module via the UTOPIA interface.

The ADSL processing module implements the function of converting ATM cells into ADSL signals in downstream direction from the DSLAM device to subscriber side. The process is reverse to the above process, i.e., the ADSL processing module performs framing, CRC scrambling, RS encoding, encapsulation, mapping, Inverse Fast Fourier Transform (IFFT), cyclic prefix attaching, D/A conversion, filtering, amplification, and driving on the ATM cells to obtain the ADSL modulated signals, and sends the signals via a twisted pair.

The ATM multiplex/demultiplex module is designed to poll multiple ADSL ports of the ADSL processing module and implement multiplexing of upstream cells and demultiplexing of downstream cells via the multiple ADSL ports, so as to adapt the traffic streams from the multiple ADSL ports to the upstream port. The ATM multiplex/demultiplex module is also designed to poll multiple SHDSL ports of the SHDSL processing module, to implement multiplexing of upstream cells and demultiplexing of downstream cells via the multiple SHDSL ports. The ATM multiplex/demultiplex module further provides flow control function, so as to allocate bandwidth in accordance with the status and activated rate of the SHDSL ports and discard low-level cells in accordance with the traffic level; furthermore, the ATM multiplex/demultiplex module provides an externally attached memory to store the cells.

In the upstream direction from subscriber side to the upstream network, the ATM multiplex/demultiplex module processes as follows: the ADSL processing module converts multi-channel ADSL signals into ATM cells and sends the ATM cells to the multiplex/demultiplex module; the ATM multiplex/demultiplex module buffers the ATM cells into the receiving FIFO (First In First Out) buffer of the ATM multiplex/demultiplex module; the ATM layer extracts the VPI/VCI from the ATM cells and performs searching in a table, discards invalid cells and replaces VPI/VCI of valid ATM cells in accordance with the VPI/VCI translation table, and sends the valid ATM cells to different sending queues in the external memory according to their priorities to wait for being sent. The ATM multiplex/demultiplex module checks respectively the high-priority sending queue and the low-priority sending queue in the external memory; if there is data in the high-priority sending queue, it reads the data and sends the data to the FIFO buffer to wait for being sent; the ATM multiplex/demultiplex module polls the SHDSL ports of the SHDSL processing module; if the SHDSL ports are ready to receive data, it sends the data in the FIFO buffer to the SHDSL processing module.

In the downstream direction from the upstream network to subscriber side, the ATM multiplex/demultiplex module processes in a similar way with the process in the upstream direction: the SHDSL processing module converts multi-channel SHDSL signals into ATM cells and sends the cells to the ATM multiplex/demultiplex module; the ATM multiplex/demultiplex module processes the cells and sends them to the ADSL processing module; the ADSL processing module in turn converts the cells into ADSL signals and sends the signals to subscribers' homes via twisted pairs.

The SHDSL processing module implements the function of converting ATM cells into SHDSL signals. In the upstream direction (from the DSLAM device to the upstream network), the SHDSL processing module performs framing, scrambling, TCM coding, pre-coding, frequency spectrum shaping, and driving on the received ATM cell stream, and then outputs the processed signals via twisted pairs; in downstream direction (from the upstream network to the DSLAM device), the SHDSL processing module performs amplification, frequency spectrum shaping, TCM decoding, descrambling, and de-framing on the received SHDSL signals, and then sends the signals in a form of ATM cells to the ATM multiplex/demultiplex module via UTOPIA L2.

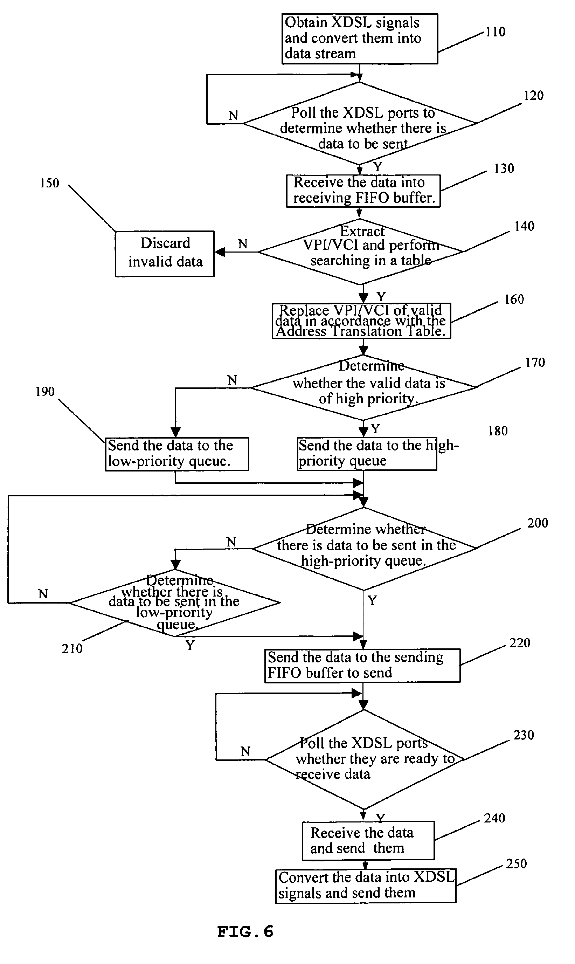

Another embodiment of the present invention provides a method for transmitting signals via DSLAM, including the following steps, as shown in Fig.6:

In step 110, XDSL signals converted by XDSL MLDEM in upstream or downstream direction is obtained; the subscriber side broadband service processing module or the network side XDSL processing module performs amplification, filtering, A/D conversion, cyclic prefix removal, FFT (Fast Fourier Transform), de-mapping, de-capsulation, RS decoding, CRC (Circle Redundant Check), and de-framing on the received XDSL signals, and then converts the signals into data stream, which may be ATM data, Ethernet data, or TDM data, and sends the data stream to the multiplex/demultiplex module via an interface, which may be a UTOPIA interface, an MII interface, or a TDM interface.

In step 120, it performs polling on multiple XDSL ports of the network side XDSL processing module or the subscriber side broadband service processing module and determines whether there is data to be sent; if there is no data to be sent, the multiplex/demultiplex module continues the polling on the processing modules; if there is data to be sent, it goes to step 130.

In step 140, it performs extracting on the VPI/VCI of upstream data obtained in step 130 in the receiving FIFO buffer of the multiplex/demultiplex module and perform searching in a table, and thereby determines whether the upstream data is valid; if the data is invalid, it goes to step 150; if the data is valid, it goes to step 160 to replace VPI/VCI of the valid data in accordance with the VPI/VCI address translation table.

In step 170, it is determined whether the valid data obtained in step 160 is of high priority; if the data is of high priority, it goes to step 180 to send the high-priority data to the high-priority queue in the external memory of the multiplex/demultiplex module to wait for being sent; if the data is not of high priority, it goes to step 190 to send the low-priority data to the low-priority queue of the external memory of the multiplex/demultiplex module to wait for being sent.

In step 200, it is determined whether there is data to be sent in the high-priority sending queue in the external memory of the multiplex/demultiplex module, if there is data in the high-priority sending queue, then it goes to step 220, the data is read into the sending FIFO buffer to wait for being sent; if there is no data in the high-priority sending queue, it goes to step 210 to determine whether there is data to be sent in the low-priority sending queue; if there is data to be sent, it goes to step 220; otherwise it returns to step 200.

In step 230, it performs polling on multiple XDSL ports of the network side XDSL processing module or the subscriber side broadband service processing module so as to determine whether they are ready to receive data; if the XDSL ports of the processing modules are ready to receive data, it goes to step 240 to send the data in the sending FIFO buffer to the processing modules; if the XDSL ports of the processing modules are not ready to receive data, it continues the polling.

In step 250, the data is received and is performed on framing, scrambling, TCM encoding, pre-coding, frequency spectrum shaping, and driving to be converted into XDSL signals, and the XDSL signals are output via a twisted pair; at the other end of the twisted pair, the XDSL signals are converted into corresponding data streams by the XDSL MODEM and then sent to the upstream network or subscribers' homes.

As described in detail in the following example, the signal transmission in upstream direction from subscriber side to the upstream network includes the following steps:

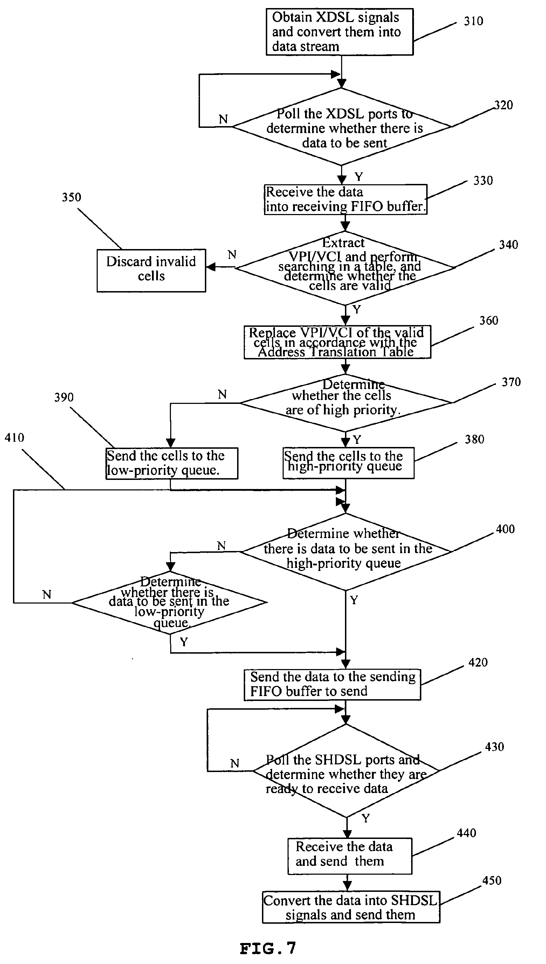

As shown in Fig. 7, the network side XDSL processing module is an SHDSL processing module; the subscriber side broadband service processing module is an ADSL processing module; the multiplex/demultiplex module is an ATM multiplex/demultiplex module; the memory is externally attached to the ATM multiplex/demultiplex module; both the interface between the ATM multiplex/demultiplex module and the SHDSL processing module as well as the interface between the ATM multiplex/demultiplex module and the ADSL processing module are both UTOPIA interfaces; the ATM multiplex/demultiplex module has a flow control module inside.

In step 310, ADSL signals converted by the ADSL MODEM from subscriber side are obtained, and the ADSL processing module performs amplification, filtering, A/D conversion, cyclic prefix removal, FFT (Fast Fourier Transform), de-mapping, de-capsulation, RS decoding, CRC (Circle Redundant Check) and de-framing on the received ADSL signals to convert the ADSL signals into ATM cells; then, the ADSL processing module sends the ATM cell to the ATM multiplex/demultiplex module via the UTOPIA interface.

In step 320, it performs polling on multiple ADSL ports of the ADSL processing module and determines whether there is data to be sent; if there is no data to be sent, the ATM multiplex/demultiplex module continues the polling of multiple ADSL ports of the ADSL processing module; if there is data to be sent, it goes to step 330.

In step 340, the VPI (Virtual Path Identifier) /VCI (Virtual Channel Identifier) of ATM upstream cells obtained in step 330 in the receiving FIFO buffer of the ATM multiplex/demultiplex module is extracted and performs searching in a table, so as to determine whether the ATM upstream cells are valid; if the cells are invalid, it goes to step 350; if the cells are valid, it goes to step 360 to replace VPI/VCI of the valid ATM cells in accordance with the VPI/VCI address translation table.

In step 370, it is determined whether the valid ATM cells obtained in step 360 is of high priority; if the ATM cells are of high priority, it goes to step 380 to send the high-priority ATM cells to the high-priority queue in the external memory of the ATM multiplex/demultiplex module to wait for being sent; if the ATM cells are not of high priority, it goes to step 390 to send the low-priority ATM cells to the low-priority queue of the external memory of the ATM multiplex/demultiplex module to wait for being sent.

In step 400, it is determined whether there are ATM cells to be sent in the high-priority sending queue in the external memory of the ATM multiplex/demultiplex module; if there are ATM cells in the high-priority sending queue, it goes to step 420 to read the ATM cells into the sending FIFO buffer to wait for being sent; if there is no ATM cells in the high-priority sending queue, it goes to step 410 to determine whether there are ATM cells to be sent in the low-priority sending queue; if there are ATM cells in the low-priority sending queue, it goes to step 420; otherwise it returns to step 400.

In step 430: it performs polling on multiple SHDSL ports of the SHDSL processing module to determine whether the SHDSL ports are ready to receive data; if the SHDSL ports are ready to receive data, it goes to step 440 to send the data in the sending FIFO buffer to the SHDSL processing module; if the SHDSL ports are not ready to receive data, it continues the polling.

In step 450: the ATM cells are received and performed on framing, scrambling, TCM encoding, pre-coding, frequency spectrum shaping, and driving to be converted into SHDSL signals, and the SHDSL signals are sent via a twisted pair; at the opposite end of the twisted pair, the SHDSL signals are converted into corresponding data streams by the SHDSL MODEM and then sent to the upstream network.

The steps of signal transmission in downstream direction from the upstream network to subscriber side are similar to those of signal transmission in upstream direction from subscriber side to the upstream network and are described in brief as follows: as shown in Fig. 5, the SHDSL processing module converts multi-channel SHDSL signals into ATM cells and sends the ATM cells to the ATM demultiplexing/processing module; the ATM multiplex/demultiplex module processes the ATM cells and then sends them to the ADSL processing module; then, the ADSL processing module converts the ATM cells into ADSL signals and sends the ADSL signals to subscribers' homes via twisted pairs.

## Claims

1. A Digital Subscriber Line (XDSL) access multiplexer, comprising:
a subscriber side broadband service processing module, a multiplex/demultiplex module, a network side processing module, and a memory; wherein
the subscriber side broadband service processing module processes subscriber side upstream XDSL signals from subscriber side and/or downstream data stream signals from the multiplex/demultiplex module;
the multiplex/demultiplex module multiplexes and/or demultiplexes and processes signals from the subscriber side broadband service processing module and signals from the network side processing module, and sends the processed signals to the network side processing module and the subscriber side broadband service processing module respectively;
the network side processing module converts the processed upstream data stream signals into network side upstream XDSL signals and send the network side upstream XDSL signals to the upstream network, and/or convert the network side downstream XDSL signals into data stream signals to be processed and send the data stream signals to be processed to the multiplex/demultiplex module; and
the memory stores the processed upstream data stream signals and/or the processed downstream data stream signals.

2. The digital subscriber line access multiplexer according to claim 1, wherein the multiplex/demultiplex module further comprises a determining device for determining whether the upstream data stream signals to be processed meet predetermined rules after being multiplexed or whether the downstream data stream signals to be processed meet predetermined rules after being demultiplexed; if so, determining the signals as valid, otherwise discarding the signals;
wherein said determination that whether said upstream data stream signals to be processed meet the predetermined rules after being multiplexed or whether said downstream data stream signals to be processed meet the predetermined rules after being demultiplexed is performed by searching in a table with the Virtual Path Identifier (VPI) /Virtual Channel Identifier (VCI) of said upstream or downstream data stream signals to be processed obtained by said multiplex/demultiplex module.

3. The digital subscriber line access multiplexer according to claim 1, wherein the memory is externally attached to and/or built in the multiplex/demultiplex module; said multiplex/demultiplex module further comprises a flow control module, which is designed to allocate bandwidth in accordance with the status and activated rate of the ports of said network side processing module or said subscriber side broadband service processing module and discard low-level data in accordance with the traffic levels of said processed upstream or downstream data stream signals.

4. The digital subscriber line access multiplexer according to claim 1, wherein the interface between the network side processing module and the multiplex/demultiplex module is a Universal Test and Operations Physical Interface for Asynchronous Transfer Mode (UTOPIA) interface, or a Media Independent Interface (MII), or a Time Division Multiplexing (TDM) interface.

5. The digital subscriber line access multiplexer according to claim 1, wherein the network side processing module is an Asynchronous Digital Subscriber Line (ADSL) processing module, which provides an ADSL interface connected with a twisted pair; or, said network side processing module is a Very High Digital Subscriber Line (VDSL) processing module, which provides a VDSL interface connected with a twisted pair; or, said network side processing module is a Single Pair High Bit Rate Digital Subscriber Line (SHDSL) processing module, which provides an SHDSL interface connected with a twisted pair.

6. The digital subscriber line access multiplexer according to claim 5, wherein the ADSL processing module employs ADSL technique, ADSL2 technique, ADSL+ technique, or ADSL2+ technique; the SHDSL processing module employs single pair SHDSL technique or multi-pair SHDSL technique.

7. A method for transmitting signals based on the digital subscriber line access multiplexer of claim 1, comprising the steps of:
obtaining subscriber side upstream XDSL signals from subscriber side and converting the subscriber side upstream XDSL signals into upstream data stream signals to be processed, or obtaining network side downstream XDSL signals from the upstream network and converting the network side downstream XDSL signals into downstream data stream signals to be processed;
multiplexing the upstream data stream signals to be processed, or demultiplexing the downstream data stream signals to be processed;
determining whether said upstream or downstream data stream signals to be processed are valid;
sending the valid data stream signals to different sending queues in the memory;
sending the processed upstream or downstream data stream signals from the queues;
converting the processed upstream data stream signals into network side XDSL signals and sending the network side XDSL signals to the upstream network via a twisted pair, or converting the processed downstream data stream signals into subscriber side XDSL signals and sending the subscriber side XDSL signals to the subscriber side via a twisted pair.

8. The method for transmitting signals according to claim 7, wherein the upstream or downstream data stream signals to be processed or the processed upstream or downstream data stream signals are Asynchronous Transfer Mode (ATM) data, or Ethernet data, or TDM data.

9. The method for transmitting signals according to claim 7, wherein the step of multiplexing the upstream data stream signals to be processed or demultiplexing the downstream data stream signals to be processed comprises the steps of: polling a plurality of XDSL ports of the subscriber side broadband service processing module or the network side processing module, to determine whether there are upstream or downstream data stream signals to be processed to be sent; if not, said multiplex/demultiplex module continuing to poll the plurality of XDSL ports of the subscriber side broadband service processing module or the network side processing module, otherwise receiving the upstream or downstream data stream signals to be processed into the First In First Out (FIFO) buffer of the multiplex/demultiplex module;
said step of determining whether said upstream or downlstream data stream signals to be processed are valid comprises the following steps: extracting said upstream data stream signals to be processed in the receiving FIFO buffer or said downstream data stream signals to be processed in the sending FIFO buffer of said multiplex/demultiplex module, performing searching in a table in accordance with the VPI/VCI of said upstream data stream signals to be processed or said downstream data stream signals to be processed, and thereby determining whether said upstream data stream signals to be processed or said downstream data stream signals to be processed are valid; if not, deleting the data, otherwise replacing VPI/VCI of the valid data in accordance with the VPI/VCI address translation table.

10. The method for transmitting signals according to claim 7, wherein the step of sending said valid data stream signals to different sending queues in the memory comprises the steps of: determining whether the valid data stream signals are of high priority; if they are of high priority, sending the high-priority data to the high-priority queue in the memory to wait for being sent; if they are of low priority, sending the low-priority data to the low-priority queue in the memory to wait for being sent;
said step of sending said processed upstream or downstream data stream signals in said queues comprises the following steps: determining whether there is data to be sent in the high-priority sending queue in said memory; if so, reading the data into the FIFO buffer to wait for being sent; otherwise determining whether there is data to be sent in the low-priority sending queue; if so, reading the data into the FIFO buffer to wait for being sent, otherwise returning to determine whether there is data to be sent in the high-priority sending queue in said memory; polling the plurality of XDSL ports of said network side processing module or said subscriber side broadband service processing module and determining whether the ports are ready to receive data; if so, sending the data in the FIFO buffer to said network side processing module or said subscriber side broadband service processing module, otherwise continuing the polling.
